# EUROPEAN PATENT APPLICATION

(11) **EP 4 692 759 A1**
(43) Date of publication of application: **11.02.2026**
(21) Application number: 24193132.8
(22) Date of filing: 06.08.2024
(51) Int. Cl.: G01N 15/14, B01L 3/00

(54) **SAMPLE-ADAPTABLE FLOW CELL FOR MICROSCOPE IMAGING**

(71) Applicant: Universiteit Antwerpen, 2000 Antwerpen (BE)
(72) Inventor: Vanhooydonck, Andres, 2020 Antwerpen (BE); De Vos, Winnok, 2020 Antwerpen (BE); De Beuckeleer, Sarah, 2020 Antwerpen (BE); Van De Looverbosch, Tim, 2020 Antwerpen (BE); Watts, Regan, 2020 Antwerpen (BE)
(74) Representative: De Clercq & Partners

(57) **Abstract**

Provided herein is a flow cell unit (100) for imaging of a sample of at least one multicellular construct under flow, wherein: the sample comprises one or more multicellular constructs suspended in a sample carrier liquid; and the imaging is by light microscopy; the flow cell unit (100) comprising: - a castable flow cell body (120) formed from a settable light-transparent casting substance, a casting substance, having a set state in the castable flow cell body (120), wherein the castable flow cell body (120) has a refractive index matching a refractive index of the sample carrier liquid; and - a flow cell channel (140) in the castable flow cell body (120) for flow of the sample through at least a light-interacting portion (130) of the castable flow cell body (120) such that sample is in contact with the casting substance in the set state in the light-interacting portion (130).

## Description

### Field

The invention is broadly in the field of, and in particular relates to flow cells for microscopic imaging.

### Background

Multi-cellular constructs such as induced pluripotent stem cell (iPSC)-derived organoids are rapidly emerging as models for fundamental research and preclinical testing. Their human background and three-dimensional multicellular context create a more physiologically relevant context than traditional monolayer cell cultures. The inclusion of these models in pharmaceutical research requires scalability. On the production side, companies have marketed solutions for high-throughput organoid generation. Using bioreactors, organoids can be produced and maintained in high numbers for an extended time. The bottleneck prohibiting the use of multi-cellular constructs in routine screening settings is the absence of efficient in-depth validation methodologies. Light microscopy has high potential for this purpose, but herein multi-cellular construct interrogation is complicated by their large size and opacity. The development of tissue clearing and light sheet microscopy have now made it possible to study multi-cellular constructs in their intact form (*in toto*) at cellular resolution, but with low throughput (approx. 10 samples/day). To allow its use in preclinical trials (approx. 250 candidate compounds, 10 replicates and 5 compound doses), an estimated time of 5-10 minutes per sample alongside full automation would be required to complete compound screening within 2 months (50 samples/day). These numbers illustrate the demand for novel devices and method for interrogating multi-cellular constructs with high throughput to allow their use in pharmaceutical research.

The present invention aims to overcome problems in imaging intact multi-cellular constructs rapidly.

### Summary

Provided herein is a flow cell unit (100) for imaging of a sample of at least one multicellular construct under flow, wherein:
- the sample comprises one or more multicellular constructs suspended in a sample carrier liquid; and
- the imaging is by light microscopy;
the flow cell unit (100) comprising:
- a castable flow cell body (120) formed from a settable light-transparent casting substance, a casting substance, having a set state in the castable flow cell body (120), wherein the castable flow cell body (120) has a refractive index matching a refractive index of the sample carrier liquid; and
- a flow cell channel (140) in the castable flow cell body (120) for flow of the sample through at least a light-interacting portion (130) of the castable flow cell body (120) such that sample is in contact with the casting substance in the set state in the light-interacting portion (130).

The light-transparent casting substance in the set state is preferably a gel,
- optionally wherein the gel is a hydrogel, an organogel, or a organo-hydrogel; and
- optionally wherein the gel comprises a setting agent that is agarose, polydimethylsiloxane, polysaccharide, natural synthetic polymer, or a combination of one or more of these.

The light interaction portion (130) preferably comprises an upper wall configured for transmission of light to one or more optical detection parts of the microscope.

The light interaction portion (130) preferably comprises one or more side walls (134, 134') configured for transmission of illumination or incident light to the sample.

The flow cell unit (100) preferably further comprise a base holder (220'), configured for supporting at least a lower side (124) of the castable flow cell body (120).

Further provided is a mould assembly (200) configured for preparing the castable flow cell body (120) of the flow cell unit (100) as described herein, comprising:
- a first mould body (220);
- a second mould body (250) configured to co-operate with the first mould body (220);
- a slidably removable body (270) comprising a channel portion (272) complementary to a shape of the flow cell channel (140) and configured for slidable co-operation with the first mould body (220) and/or the second mould body (250);
wherein the first mould body (220), the second mould body (250) and the channel portion (272) are configured to co-operate in the moulding state to form a moulding cavity (222) for receiving the casting substance in a pouring state and for casting the castable flow cell body (120) of the flow cell unit (100).

Further provided is a method for preparing a mould assembly (200) for preparing the castable flow cell body (120) of the flow cell unit (100) as described herein, wherein the castable flow cell body (120) of the flow cell unit (100) is for imaging by light microscopy a sample under flow comprising at least one multicellular construct suspended in a sample carrier liquid, the method comprising:
- providing a first mould body (220);
- providing a second mould body (250) configured to co-operate with the first mould body (220);
- providing a slidably removable body (270) comprising a channel portion (272) complementary to a shape of the flow cell channel (140) and configured for slidable co-operation with the first mould body (220) and/or the second mould body (250);
wherein the first mould body (220), the second mould body (250) and the channel portion (272) are configured to co-operate in the moulding state to form a moulding cavity (222) for receiving the casting substance in a pouring state and for casting the castable flow cell body (120) of the flow cell unit (100).

Further provided is a mould assembly (200) obtained by a method as described herein.

Further provided is a method for preparing a castable flow cell body (120) of a flow cell unit (100) as described herein, for imaging by light microscopy a sample under flow comprising at least one multicellular construct suspended in a sample carrier liquid, the method comprising:
- providing a mould assembly (200) configured for moulding the castable flow cell body (120);
- adding the casting substance in a pourable state to the moulding cavity (222);
- allowing or inducing the casting substance to reach the set state; and
- releasing the castable flow cell body (120) so formed from the moulding cavity (222)
wherein the castable flow cell body (120) in the set state has a refractive index matching a refractive index of the sample carrier liquid.

The mould assembly (200) is preferably the mould assembly as described herein.

The matching of the castable flow cell body (120) refractive index with the refractive index of the sample carrier liquid is preferably achieved by:
- using a casting substance carrier liquid in the casting substance in the pourable state having a same composition as the sample carrier liquid; and/or
- a step of soaking the castable flow cell body (120) so formed in one or more aliquots of the sample carrier liquid.

Further provided is a castable flow cell body (120) obtained by a method as described herein.

Further provided is a system comprising:
- a flow cell unit (100) as described herein; and
- a liquid pump system operatively connected to the flow cell unit (100) configured to induce flow of the sample;
wherein the liquid pump system comprises:
- a flow inducer and a controller, wherein the controller is configured to control the flow inducer such that direction and/or speed flow of sample induced by the flow inducer is adjustable.

The controller is preferably configured to control the flow inducer, such that a flow of sample induced by the flow inducer is in a forward direction, in a reverse direction, or is stationary.

The controller:
- may be configured to control the flow inducer such that it is synchronized with the imaging by the light microscope, wherein:
   - the controller is configured to:
      automatically identify a presence and/or absence of a multicellular construct within a field of view of the light microscope,
      or receive a signal corresponding to a presence and/or absence of a multicellular cellular construct within a field of view of the light microscope,
   - a flow of sample induced by the flow inducer is paused or its flow rate is reduced where the multicellular cellular construct is present within the field of view of the light microscope;
   - a flow of sample induced by the flow inducer is resumed or its flow rate is restored where the multicellular cellular construct is identified as absent within the field of view of the light microscope.

These and further aspects and preferred embodiments of the invention are described in the following sections and in the appended claims. The subject-matter of the appended claims is hereby specifically incorporated in this specification.

### Brief description of the drawings

The following description of the figures of specific embodiments of the invention is merely exemplary in nature and is not intended to limit the present teachings, their application or uses.
**Fig. 1** Panels A to C depict a plan view of a flow cell body as described herein in plan view (Panel A), cross-section view through plane (B-B) (Panel B), cross-section view through plane (C-C) (Panel C), wherein a light interacting portion is a protrusion with 2 side walls.
**Fig. 2** Panels A to C depict a plan view of a flow cell body as described herein in plan view (Panel A), cross-section view through plane (B-B) (Panel B), cross-section view through plane (C-C) (Panel C), wherein a light interacting portion has 2 recessed side walls.
**Fig. 3** Panels A to C depict a plan view of a flow cell body as described herein in plan view (Panel A), cross-section view through plane (B-B) (Panel B), cross-section view through plane (C-C) (Panel C), wherein a light interacting portion has one protruding side wall.
**Fig. 4** Panels A to C depict a plan view of a flow cell body as described herein in plan view (Panel A), cross-section view through plane (B-B) (Panel B), cross-section view through plane (C-C) (Panel C), wherein a light interacting portion has no side walls.
**Fig. 5** Panels A to C depict a plan view of a flow cell body as described herein in plan view (Panel A), cross-section view through plane (B-B) (Panel B), cross-section view through plane (C-C) (Panel C), wherein a light interacting portion has inclined side walls.
**Fig. 6** Panels A to C different a cross-sectional view of a base holder as described herein. In Panel A, the cross-section is across the ports, Panel B the cross-section is also across the ports and the flow cell body is present, in Panel C the cross-section is transverse through the flow cell channel.

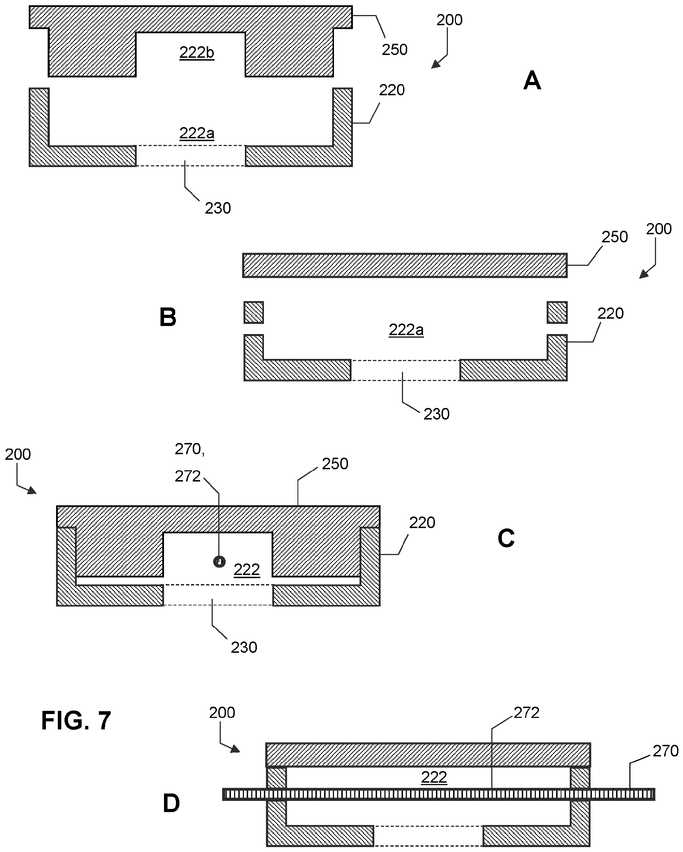

**Fig. 7** Panels A to D are different stages of coupling of the first mould body, the second mould body and slidably removable body. In Panel A the cross-section is transverse through the flow cell channel and shows the first mould body and the second mould body non-co-operating. In Panel B the cross-section is across the ports and shows the first mould body and the second mould body non-co-operating. In Panel C the cross-section is transverse through the flow cell channel and shows the first mould body and the second mould body mutually co-operating. In Panel D the cross-section is across the ports and shows the first mould body, the second mould body and slidably removable body mutually co-operating.
**Fig. 8** is a three dimensional representation of a flow cell body as described herein having a geometry complementary to an optical stage of a Leica SP8 DLS light sheet microscope.
**Fig. 9** is a three dimensional representation of a first mould body / base holder for casting the flow cell body of FIG 8 .
**Fig. 10** is a three dimensional representation of the first mould body / base holder of FIG. 9 holding the flow cell body of FIG. 8.
**Fig. 11** is a three dimensional representation of a first mould body and flow cell body after casting of FIG. 11 with the slidably removable body still in place.
**Fig. 12** shows an exploded view of an optical assembly of a light microscope (Leica SP8 DLS light sheet microscope) and the flow cell body of the FIG. 8 that is to couple with the optical assembly.
**Fig. 13** Panels A to D show results of Example 1 obtained from [C0] a castable flow cell as described herein, [C1] flow cell formed from PDMS, [C2] flow cell formed from FEP, [C3] flow cell formed from glass and a sample containing organoids in a sample carrier liquid. Panel A fluorescent image of the sample, Panel B detail of Panel A (white box), Panel C fluorescence intensity along white dash line of Panel B.
**Fig. 14** plot showing dynamic range of each image of Fig. 13 Panel A.
**Figs. 15 to 18** block illustrations of different configurations of liquid pump system described herein.

### Description of embodiments

As used herein, the singular forms "a", "an", and "the" include both singular and plural referents unless the context clearly dictates otherwise.

The terms "comprising", "comprises" and "comprised of" as used herein are synonymous with "including", "includes", "containing", or "contains", and are inclusive or open-ended and do not exclude additional, non-recited members, elements or method steps. The terms also encompass "constituted of", "consists in", "consisting of", and "consists of', and also the terms "consisting essentially of", "consisting essentially in" and "consists essentially of', which enjoy well-established meanings in patent terminology.

The recitation of numerical ranges by endpoints includes all intervening values between the lower and upper endpoints, as well as the recited endpoints. Intervening values may be integers or, where applicable, fractions, i.e., more broadly any real numbers such as any rational numbers. This applies to numerical ranges irrespective of whether they are introduced by the expression "from... to..." or the expression "between... and..." or another expression. Any numerical range recited herein is intended to include all subranges subsumed therein. For example, each sub-range between any stated value in a stated range and any other stated value in that stated range is also specifically disclosed.

Each sub-range between any stated value in a stated range and either the lower endpoint or the upper endpoint of the stated range is also specifically disclosed. The stated value may be an isolated value or an endpoint of a range subsumed by or overlapping with the stated range. For example, for a stated range with lower endpoint L1 and upper endpoint U1 (i.e., stated range L1-U1) and a stated sub-range nested within the stated range with lower endpoint L2 and upper endpoint U2 (i.e., stated sub-range L2-U2), also specifically disclosed are the subranges L1-L2, L1-U2, L2-U1, and U2-U1.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members. In another example, "one or more" or "at least one" may refer to 1, 2, 3, 4, 5, 6, 7 or more.

As used herein, the term "and/or" when used in a list of two or more items, means that any one of the listed items can be employed by itself or any combination of two or more of the listed items can be employed. For example, if a list is described as comprising group A, B, and/or C, the list can comprise A alone, B alone, C alone, A and B in combination, A and C in combination, B and C in combination, or A, B, and C in combination.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

For example, in the appended claims, any of the claimed embodiments can be used in any combination.

Similarly, it should be appreciated that in the description of illustrative embodiments of the invention, various features of the invention are sometimes grouped together in a single embodiment, figure, or description thereof for the purpose of streamlining the disclosure and aiding in the understanding of one or more of the various inventive aspects.

In the present description of the invention, reference is made to the accompanying drawings that form a part hereof, and in which are shown by way of illustration only of specific embodiments in which the invention may be practiced. Parenthesized or emboldened reference numerals affixed to respective elements merely exemplify the elements by way of example, with which it is not intended to limit the respective elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated.

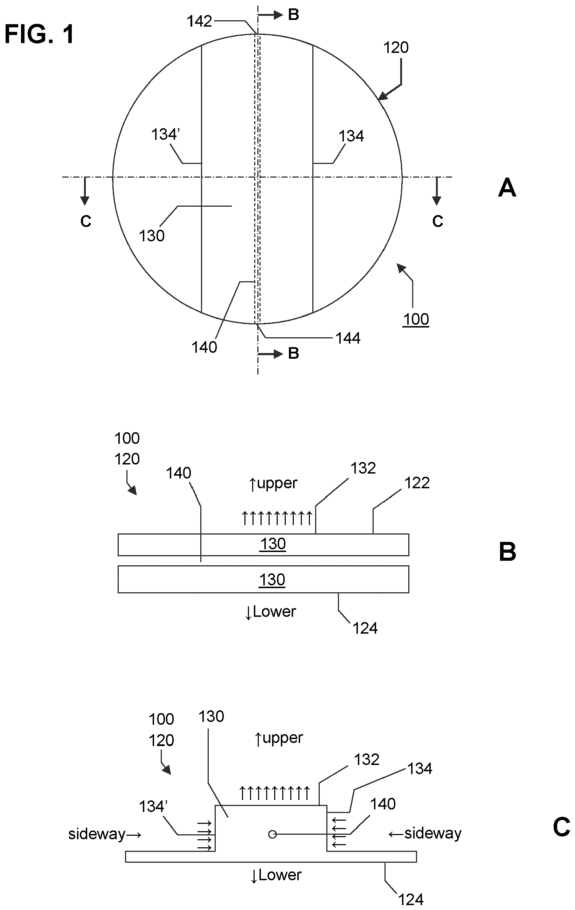

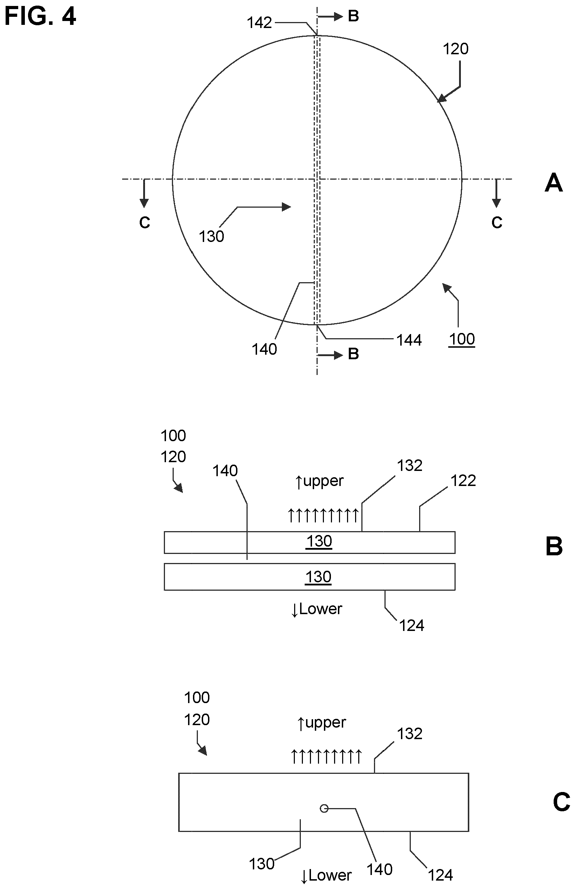

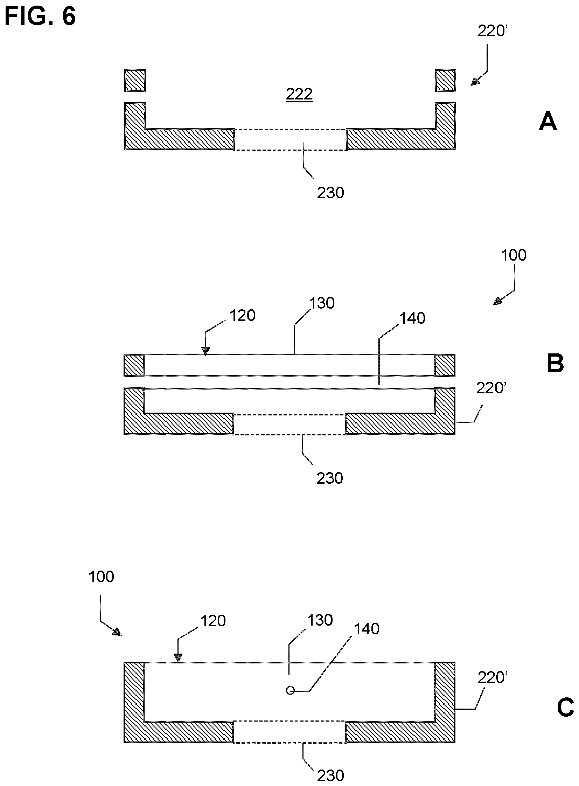

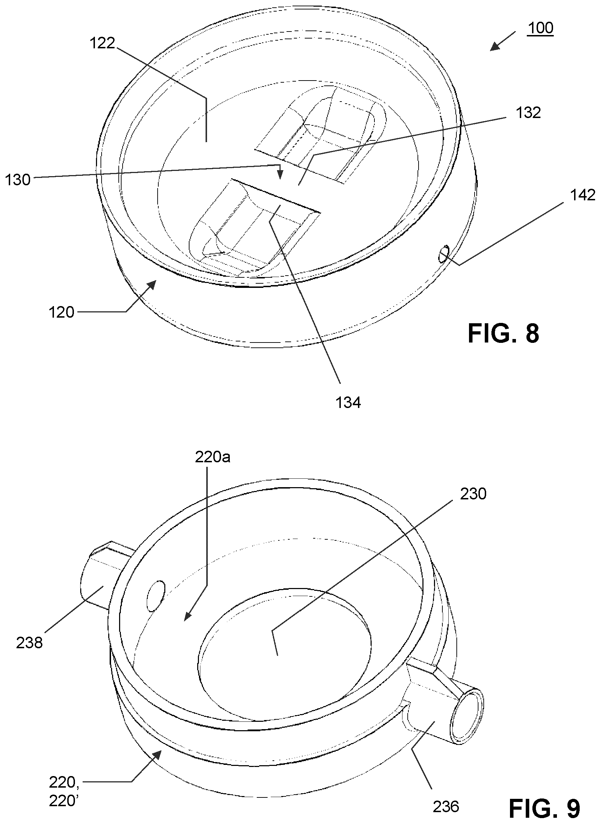

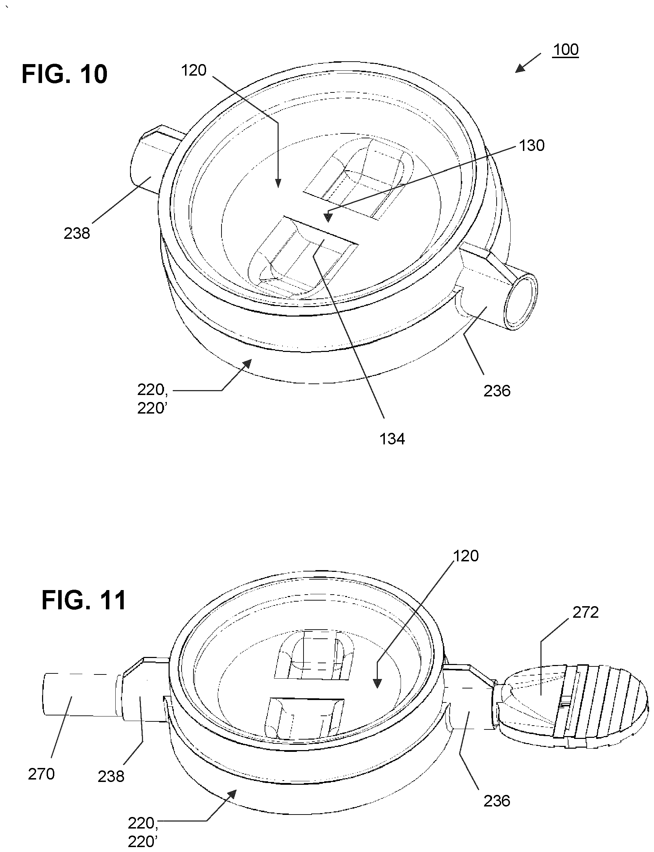

Provided herein is a flow cell unit (100) for imaging of a sample of at least one multicellular construct under (an induced) flow. The sample comprises one or more multicellular constructs suspended in a sample carrier liquid. The imaging is by light microscopy. Examples of a flow cell unit (100) are shown in **FIGs. 1 to 5** Panels **A** to **C,** **FIG. 6** Panels **B** and **C,** **FIGs. 8 to 12****.**

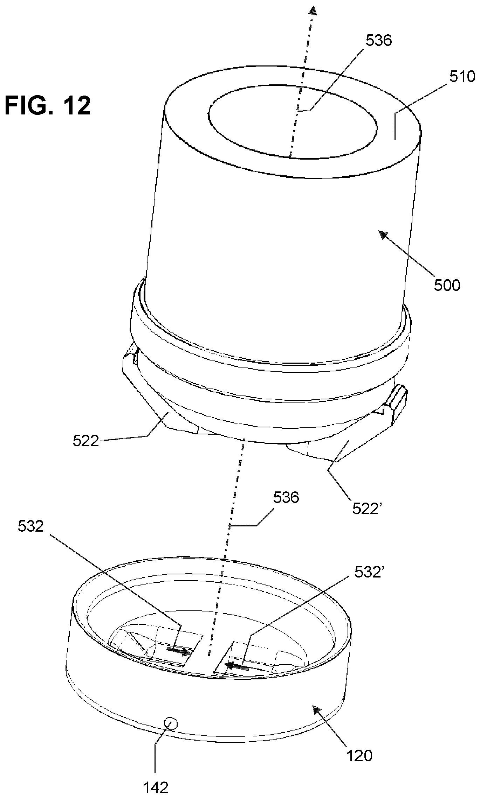

The flow cell unit (100) comprises a castable flow cell body (120) (also known as flow cell body herein) formed from a settable light-transparent casting substance, a casting substance, having a set state in the castable flow cell body (120). The flow cell body (120) has a refractive index matching a refractive index of the sample carrier liquid. An example of a castable flow cell body is shown in each of **FIGs. 1 to 5** Panels **A** to **C,** **FIG. 8****,** and **FIG. 12****.**

The flow cell unit (100) further comprises a flow cell channel (140) in the castable flow cell body (120) for flow of the sample through at least a light-interacting portion (130) of the castable flow cell body (120) such that sample is in contact with the casting substance. In other words, the sample is in contact with an internal wall of the flow cell channel (140) in the set state at least in the light-interacting portion (130). In particular, at least the sample carrier liquid of the sample is in contact with the internal wall of the flow cell channel (140).

The flow can be considered as continuous (continuous flow, variable flow rate) or intermittent (periods of continuous flow and intervening periods of halted (zero flow rate) flow).

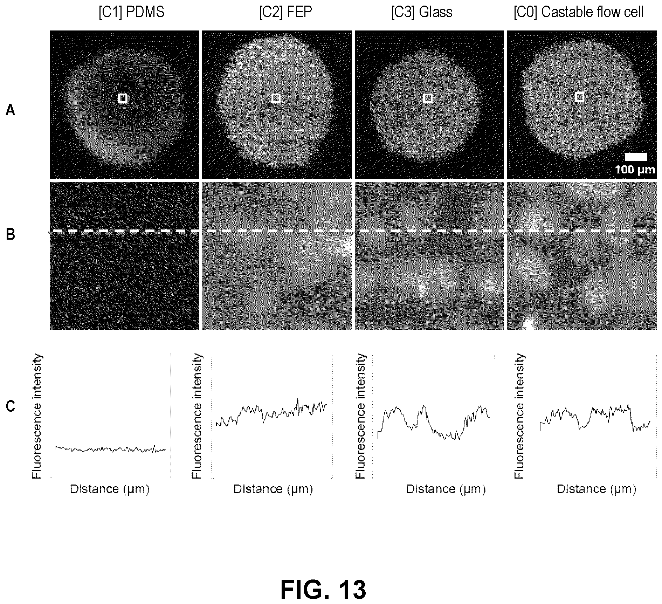

Having the sample, in particular at least the sample carrier liquid contact the casting substance allows for a better quality of image. The inventors have found that when the sample contacts an internal channel wall where refractive index does not match, there is a reduction in image quality (see Example 1 and Fig. 13) .

Because the castable flow cell body (120) can be cast uniquely for each sample, one or more substances or agents (e.g. pH buffer, salts, cell culture medium, clearing agent) may be added to the casting substance in the pouring state so as to adjust (match or tune) the properties of the castable flow cell body (120) for compatibility, in particular refractive index compatibility with the sample. Matching and tuning of a typical flow cell is not feasible because it is made from a conventional material such as polydimethylsiloxane (PDMS), fluorinated ethylene propylene (FEP), or glass whose properties are expensive and/or time consuming to adjust.

Having a flow cell channel, as opposed to discrete well measurements, allows high throughput screening of multiple multicellular constructs in the sample carrier liquid without limitations in the sample number of multicellular constructs. It facilitates automated multicellular construct measurement: a flow cell channel is a syphon through which the flow speed and direction of flow can be adjusted (e.g. automatically) such that each multicellular construct spends an optimal quantity of time within the light-interacting portion (130) being imaged by the light microscope. Flow imaging enables on line recognition of informative multicellular constructs for imaging and downstream sorting and/or retrieval. Flow imaging may be compatible with living one or more multicellular constructs.

The inventors have found that having a flow cell channel with a fixed size is still compatible with a wide range of sizes of multicellular constructs. This means that the same mould assembly (200) or the same castable flow cell body (120) can be used for a wide variety of different sample types.

The sample comprises one or more multicellular constructs and a sample carrier liquid. The one or more multicellular constructs is suspended in a sample carrier liquid. The sample is a liquid sample.

The multicellular construct may be, for instance:
- simple spheroid, organoid, assembloid;
- tissue mimic and small tissue explants;
- tissue biopsy;
- small organism (*e.g., c.elegans, d. rerio,...*) in different developmental stages (*e.g.,* egg, embryo, juvenile, adult, and the like).

The sample preferably comprises multicellular constructs of the same kind (*e.g*. all organoids), however, it is within the scope herein that the sample comprises multicellular constructs of different kinds (*e.g*. a mixture of spheroids and organoids)

A typical multicellular construct may have a size of up to around 5 mm across its maximum length. For instance, a organoid/spheroid may have a diameter in a range from 100µm to 1.5-2 mm in diameter.

The one or more multicellular constructs may be living or non-living. Typically step of clearing (see below) would render the one or more multicellular constructs non-living.

The one or more multicellular constructs may or may not have been subject to clearing prior to forming a sample as described herein. The term clearing as known in the art and refers to a process of rendering the one or more multicellular constructs transparent. The process of clearing typically comprises a lipid extraction step. Different clearing processes are known, such as Fast 3D Clear and iDISCO (https://doi.org/10.1016/i.crmeth.2021.100090, https://doi.org/10.1016/j.cell.2014.10.010). Examples of clearing agents include dibenzyl ether (DBE), ethyl cinnamate, iohexol (Histodenz, nycodenz). See, for example, doi: 10.1016/j.crmeth.2021.100090; doi: 10.1016/j.cell.2014.10.010; doi 10.1038/nn.4107.

The sample carrier liquid may be any suitable for maintaining optimal conditions of the one or more multicellular constructs in the sample.

The sample carrier liquid comprises a liquid solvent such as:
- water;
- organic solvent such as alcohol (*e.g*. methanol or ethanol);
- a mixture of water and organic solvent such as ethanol and water.

The sample carrier liquid may comprise one or more other substances or agents for maintenance of optimal conditions for the at least one multicellular construct, which are known in the art. Examples include, but are not limited to one or more of: pH buffer (*e.g*. phosphate buffer), salts (*e.g*. sodium and/or potassium salts), cell culture medium, clearing agent (*e.g*. iohexol (Nycodenz, histodenz), ethyl cinnamate, glycerol, dibenzyl ether (DBE)).

Where the sample contains one or more spheroid, and/or one or more organoid, and/or one or more assembloid, and a clearing agent has been used (multicellular constructs are non-living), the sample carrier liquid preferably contains one or more clearing agent such as dibenzyl ether (DBE), ethyl cinnamate, glycerol, iohexol (Histodenz, nycodenz).

Where the sample contains one or more spheroid, and/or one or more organoid, and/or one or more assembloid, and a clearing agent has not been used (multicellular constructs are living), the sample carrier liquid preferably contains cell culture medium used to propagate or maintain health of the multicellular constructs.

The imaging is by light microscopy which may be any type of light microscopy such as:
- brightfield (*e.g*. transmission, phase contrast);
- dark field;
- fluorescence-based (*e.g*. confocal, multiphoton, light);
- light sheet fluorescence microscopy;
- optical projection tomography (OPT).

The light-interacting portion (130) may be illuminated from below, from above, or from the side according to the type of light microscopy.

By light microscopy, it is meant microscopy using light (incident/illumination, detected, emitted) having a wavelength or a wavelength band between 190 and 1700 nm.

The casting substance has a pouring state and a set state. The casting substance in the pouring state is pourable into a mould assembly (see elsewhere herein). The casting substance in the set state has been moulded into the flow cell body (120). The flow cell body (120) comprises or is the casting substance in the set state. The casting substance is preferably a settable gel. The flow cell body (120) is formed by applying the casting substance in the pouring state to the mould assembly.

The casting substance in the set state is a gel. A gel as understood in the art is a class of matter between liquid and solid - semi-solid - that maintains its three-dimensional (*i.e*. cast) shape in the set state. It contain a three-dimensional polymers network and is mostly liquid by mass in the set state.

The gel is preferably a hydrogel (gel containing predominantly water), or an organogel (gel containing predominantly organic solvent), or an organo-hydrogel (gel containing predominantly water and organic solvent).

The casting substance in the set state is light transparent, meaning it is capable of conducting light having a wavelength or a wavelength band between 190 and 1700 nm.

The use of a gel allows the castable flow cell body (120) to be matched to the sample carrier liquid. A composition of the CS carrier liquid can be readily adjusted e.g. prior to pouring of the casting substance and/or by after-soaking of the set casting substance in a liquid of the desired composition. The setting agent (*e.g*. agarose) is functional in maintaining a three-dimensional geometry of the castable flow cell body (120) by acting as a three-dimensional scaffold. A majority of the castable flow cell body (120) is the CS carrier liquid by weight held between the scaffold. The CS carrier liquid does not influence the geometry of the scaffold, hence, the CS carrier liquid is composition-adjustable or swappable in order to match the refractive index of the sample carrier liquid. Where a flow cell is made *e.g*. from PDMS, FEP, or glass, its fixed refractive index and its fixed geometry are both a potential source of refractive distortion for the microscopy.

The casting substance comprises one or more setting agents. Examples of setting agents include agarose, polydimethylsiloxane, polysaccharide (*e.g*. alginate), natural synthetic polymers (polyvinyl alcohol (PVA), polyethylene glycol (PEG)). The setting agent causes the casting substance to set in the set state. More in particular, the setting agent causes gelation, namely creation of a three-dimensional, cross-linked network within the carrier substance carrier liquid (see later below).

The casting substance further comprises a casting substance carrier liquid, CS carrier liquid. The CS carrier liquid comprises a liquid solvent such as
- water (thereby forming a hydrogel in the set state);
- organic solvent such as alcohol (*e.g*. methanol or ethanol) (thereby forming an organogel in the set state);
- a mixture of water and organic solvent such as ethanol and water (thereby forming an organo-hydrogel in the set state).

The CS carrier liquid may comprise one or more other substance or agents for maintenance of optimal conditions for the at least one multicellular construct, which are known in the art. Examples include, but are not limited to one or more of: pH buffer (*e.g*. phosphate buffer), salts (*e.g*. sodium and/or potassium salts), cell culture medium, clearing agent (*e.g*. iohexol (Nycodenz, histodenz), ethyl cinnamate, glycerol, dibenzyl ether (DBE)).

The CS carrier liquid may have the same composition as the sample carrier liquid.

The casting substance (pouring or set state) preferably comprises agarose.

The casting substance (pouring or set state) preferably comprises agarose in a quantity 1% to 4% w/w.

Where the sample contains one or more spheroid, and/or one or more organoid, and/or one or more assembloid, and a clearing agent has been used (multicellular constructs are non-living), the casting substance (pouring or set state) preferably contains one or more clearing agent such as dibenzyl ether (DBE), ethyl cinnamate, glycerol, iohexol (Histodenz, nycodenz).

Where the sample contains one or more spheroid, and/or one or more organoid, and/or one or more assembloid, and a clearing agent has not been used (multicellular constructs are living), the casting substance (pouring or set state) preferably contains cell culture medium used propagate or maintain health of the multicellular constructs.

As mentioned elsewhere herein, the flow cell body (120) has a refractive index matching a refractive index of the sample carrier liquid. The respective refractive indexes may be measured according to techniques known in the art.

The technique used to measure the refractive index of the castable flow cell body (120) in the set state and the refractive index of the sample carrier liquid is the same. Conditions such as temperature and instrumentation are the same.

The refractive index may be measured with a refractometer, such as a digital refractometer. Examples of suitable commercially available refractometers include those manufactured by Atago (*e.g*. PAL series of refractometer).

Because the refractive index of the castable flow cell body (120) and the refractive index of the sample carrier liquid are compared, the comparison is independent of the technique for measuring the refractive index.

Where the castable flow cell body (120) in the set state has a refractive index matching a refractive index of the sample carrier liquid, it is meant that the respective refractive indexes are no more than ±0.5 % different, more preferably no more than ±0.25 % different.

The matching of the castable flow cell body (120) refractive index with the refractive index of the sample carrier liquid may be achieved by providing the casting substance in the pourable state such that the casting substance in a set state has a refractive index matching a refractive index of the sample carrier liquid. The matching may be achieved, for instance, by using a casting substance (CS) carrier liquid in the pourable state having a same composition as the sample carrier liquid.

Alternatively or additionally, matching may be achieved, for instance, by a step of soaking the castable flow cell body (120) so formed in one or more aliquots of the sample carrier liquid. The soaking is for a duration of time such that the sample carrier liquid equilibrates with or exchanges with the castable flow cell body (120). More specifically, the soaking is for a duration of time such that the sample carrier liquid equilibrates with or exchanges with the CS carrier liquid present in the castable flow cell body (120).

The flow cell body (120) formed by applying the casting substance to a mould assembly (200).

The flow cell body (120) is preferably shaped to complement a sample stage and optics of the light microscope. For instance, **FIG. 12** depicts an optical assembly (500) of a light microscope, having an optical barrel (510) and a pair of diametrically opposed light sources (522, 522') which are particular to a Leica light microscope (Leica SP8 DLS). The flow cell body (120) side walls (134, 134') are configured to align with the light sources (522, 522') such that light is directed (532, 532') from the light sources (522, 522') to the light interacting portion (130). Light (536) enters the optical barrel (510) and becomes focused on a light sensor (not shown) of the microscope.

It is appreciated that the geometry of the flow cell body (120) can be readily changed by changing the geometry of the mould assembly (200). The geometry of the mould assembly (200) can be readily changed because it is amendable to additive manufacturing (*e.g*. 3D printing).

The flow cell body (120) may have an upper side that faces the optical-detection part of the light microscope and an opposing lower side. It is appreciated that the terms "upper" and "lower" are relative to each other and refer to opposing (major) sides of the castable flow cell body (120). Alternatively, the upper side may in use point upwards (away from the ground) or may in use point downwards (towards the ground).

The light interacting portion (130) is a volume portion of the castable flow cell body (120) configured for passage of light. The light is light for detection by the microscope; it is typically light emitted by the sample (*e.g*., by fluorescence), or light after interacting with the sample (light detected by the microscope in transmission or reflection mode). The light is also incident (illumination or excitation) light.

The light interacting portion (130) contains at least a part of the flow cell channel (140). The light for detection by the microscope passes from the flow cell channel (140) through the light interacting portion (130). Incident light passing through the light interacting portion (130) interacts with the sample in the flow cell channel (140).

A geometry of light interacting portion may be determined according to a configuration of the light microscope (*e.g*. type of microscopy, brand of light microscope, geometry of microscope stage and lens assembly). Preferably, the light interacting portion has a shape complementary to sample-interacting parts of the microscope.

The light interacting portion (130) comprises an exit wall (132) configured for transmission of light (away from the flow cell channel (140) and) towards one or more optical detection parts of the microscope.

The exit wall (132) is configured for transmission of light for transmission of light that is:
- light emitted light by the sample (e.g. by fluorescence),
- light after interacting with the sample (light detected by the microscope in transmission or reflection mode).

The light passing through the exit wall (132) is travelling in a net upper direction. The exit wall (132) is preferably planar. The exit wall (132) is disposed over the flow cell channel.

The exit wall (132) is disposed at such an angle enabling passage of exiting light towards one or more optical detection parts of the microscope. Preferably, the exit wall (132) is disposed at such an angle that a path of light exiting the sample crosses the exit wall (132) at a normal angle (i.e. perpendicular to the exit wall (132)).

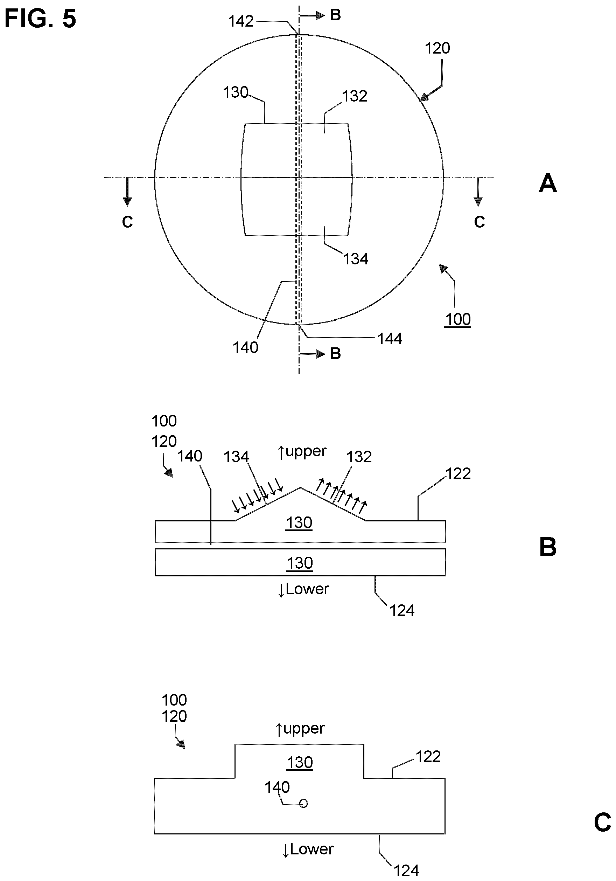

The exit wall (132) may be disposed parallel to a longitudinal axis of the flow cell channel (140) (*e.g*. **FIGs. 1 to 4**). The exit wall (132) may be disposed inclined to a longitudinal axis of the flow cell channel (140) (*e.g*. **FIG. 5**).

The light interacting portion (130) may comprise at least one entry wall (134, 134') configured for transmission of incident light to the sample (in the flow channel (140)).

The entry wall (134, 134') is disposed at such an angle enabling passage of entry light towards the flow cell channel (140). Preferably, the exit wall (132) is disposed at such an angle that a path of light exiting the sample crosses the entry wall (134, 134') at a normal angle.

The at least one entry wall (134, 134') is preferably planar. An entry wall (134, 134') may be disposed parallel to a longitudinal axis of the flow cell channel (140) (*e.g*. **FIGs. 1** to **4**). An entry wall (134, 134') may be disposed inclined to a longitudinal axis of the flow cell channel (140) (*e.g*. **FIG. 5**).

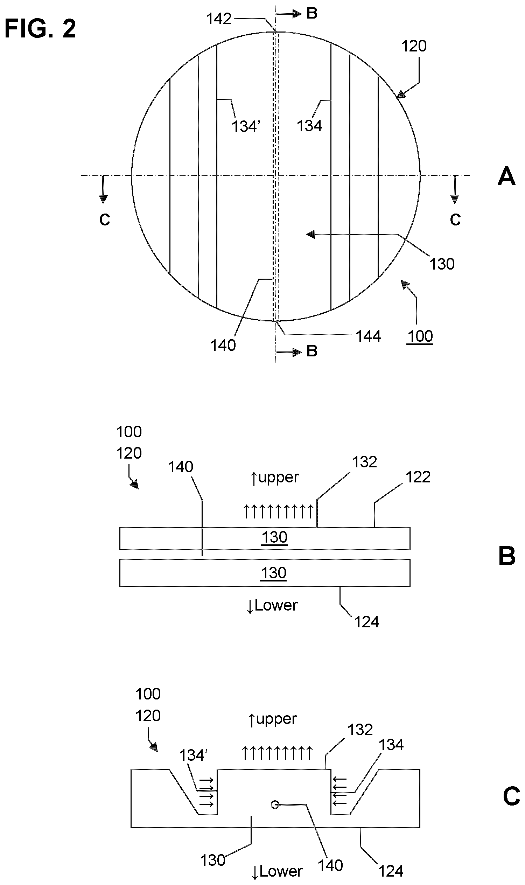

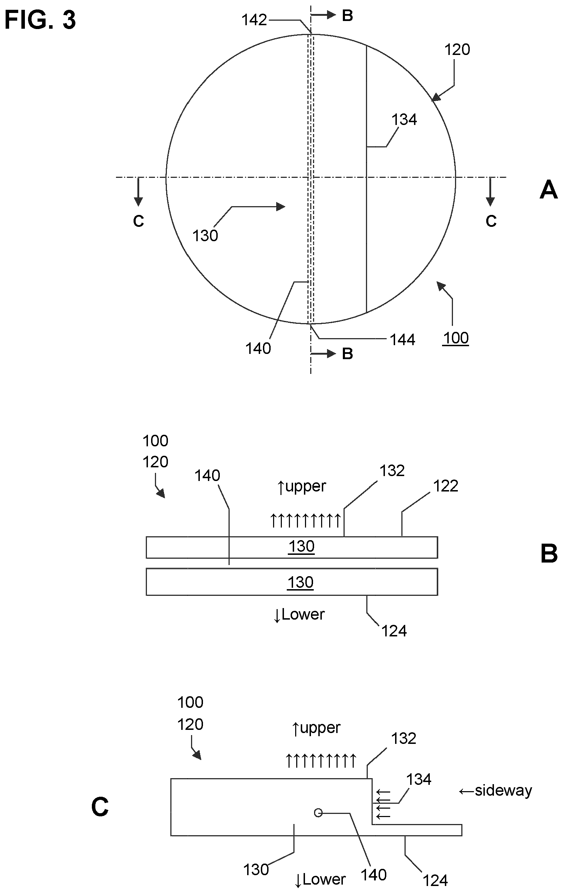

The at least one entry wall (134, 134') may be provided as protrusion (*e.g*. **FIGs. 1****,** **3** and **5**) or as an indentation (*e.g*. **FIGs. 2****,** **8****,** **9****,** **14****,** **12**). Where there are two entry walls (134, 134') (*e.g*. **FIGs. 2** and **3**), they are preferably planar, mutually parallel and disposed opposite each other.

The at least one entry wall (134, 134') is particularly useful for fluorescence imaging; illumination of the same from a sideway direction reduces illumination light entering the microscope and offers a benefit of confocality.

The sample is in contact with an internal wall of the flow cell channel (140) in the set state at least in the light-interacting portion (130). More in particular, the sample is in (direct) contact with the casting substance of the flow cell channel (140) in the set state at least in the light-interacting portion (130). The flow cell channel (140) is devoid of additional conduit between the sample and casting substance.

The flow cell channel (140) at least in the light-interacting portion (130) may be longitudinal.

The flow cell channel (140) at least in the light-interacting portion (130) may linear, curved (as an arc of a circle), or helical (*e.g*. with ≥0.5 to ≤12, more preferably ≥0.5 to ≤5 turns).

The flow cell channel (140) at least in the light-interacting portion (130) may have a transverse cross-section having a constant shape (*e.g*. circular, oval, rectangular, regular polygonal, irregular polygonal) along the longitudinal span of the flow cell channel (140) at least in the light-interacting portion (130).

The flow cell channel (140) at least in the light-interacting portion (130) may have a transverse cross-section having a constant size (and optionally shape) along the longitudinal span of the flow cell channel (140) at least in the light-interacting portion (130).

The flow cell channel (140) at least in the light-interacting portion (130) may have a transverse cross-section having a gradually increasing size along the longitudinal span of the flow cell channel (140) at least in the light-interacting portion (130).

The flow cell channel (140) may be furcate (*e.g*. bifurcate, trifurcate, quadfurcate). Where the flow channel furcates (*e.g*., bifurcate, trifurcate, etc) it furcates into multiple branches as a point of furcation.

The point of furcation is preferably outside the light-interacting portion (130). Where there is a net flow direction by the sample, the point of furcation is preferably downstream of the light-interacting portion (130).

The furcation allows sample to be directed through one of both branch after imaging. The furcation allows sample to be directed selectively through one branch after imaging.

The flow cell channel has at least 2 ports, each for connection to an external connector and/or conduit. The external connector may comprise a Luer connection.

One port is a first port for entry (forward flow) or exit (reverse flow) of the liquid sample. One port, different from the first port inlet is a second port for exit (forward flow) or entry (reverse flow) of the liquid sample.

Where the flow channel furcates (*e.g*., bifurcate, trifurcate, etc) into multiple branches, one branch end terminates in a port.

The flow cell unit (100) may further comprise a base holder (220'), configured for supporting (at least) a lower side (124) of the castable flow cell body (120).

The base holder (220') may comprise a light-transmission window (230) for passage of light to and/or from the light-interacting portion (130) of the castable flow cell body (120). The light-transmission window (230) at least partially overlaps with the light-interacting portion (130) of the castable flow cell body (120). The light-transmission window (230) preferably subsumes the light-interacting portion (130) of the castable flow cell body (120).

Further provided is a mould assembly (200) configured for preparing the castable flow cell body (120) of the flow cell unit (100) as described herein. The mould assembly (200) has a moulding state and a release state.

The mould assembly (200) comprises a first mould body (220) and a second mould body (250) configured to co-operate with the first mould body (220).

The mould assembly (200) further comprises a slidably removable body (270) comprising a channel portion (272) complementary to a shape of the flow cell channel (140), configured for slidable coupling with the first mould body (220) and/or the second mould body (250).

The first mould body (220), the second mould body (250) and the channel portion (272) are configured to co-operate in the moulding state to form a moulding cavity (222) for receiving the casting substance and for casting the castable flow cell body (120) of the flow cell unit (100).

The first mould body (220), the second mould body (250) and the slidably removable body (270) are configured in the release state to at least partially de-cooperate to allow release of the casted castable flow cell body (120).

The coupling between the first mould body (220) and a second mould body (250) may be realised by any element(s), for instance, by co-operation of form-fitting elements such as rims, grooves, protrusions, indentations which locate the first mould body (220) and a second mould body (250) in a fixed pose (position and orientation) relation to each other.

The coupling between the first mould body (220) and/or a second mould body (250) with the slidably removable body (270) may be realised by any element(s), for instance, by the guides as described elsewhere herein.

The first mould body (220) may comprise a light-transmission window (230) for passage of light to and/or from the light-interacting portion (130) of the castable flow cell body (120). The light-transmission window (230) at least partially overlaps with the light-interacting portion (130) of the castable flow cell body (120). The light-transmission window (230) preferably subsumes the light-interacting portion (130) of the castable flow cell body (120).

The first mould body (220) and/or second mould body (250) may comprise one or more venting holes for passage of excess casting substance in the pouring state and/or for passage of air bubbles.

The moulding cavity (222) has a shape fitting to the castable flow cell body (120) of the flow cell unit (100). In other words, the moulding cavity (222) walls form a shape that is complementary to the shape of the castable flow cell body (120).

The first mould body (220) comprises a first moulding cavity portion (222a) for receiving the casting substance, and configured for casting at least the lower surface (124) (and optionally side walls) of the castable flow cell body (120).

The second mould body (250) comprises a second moulding cavity portion (222b) for casting at least the upper surface (122) (and optionally side walls) of the castable flow cell body (120). The second moulding cavity portion (222b) may include one or more portions for casting the light interacting portion (130) (*e.g*. the upper wall (132), the at least one side wall (132, 132')

The first mould body (220) and/or second mould body (250) comprises a pair of guides (236, 238). Each guide is configured for slidable coupling with the slidably removable body (270).

The pair of guides (236, 238) is configured for (stable, supporting) placement of the channel portion (272) within the moulding cavity (222) such that the channel portion (272) forms the flow cell channel (140) in the castable flow cell body (120). Each guide is preferably a through opening in a side wall of the first mould body (220) and/or second mould body (250).

Each guide (236, 238) may be provided with an elastic seal having a central aperture for passage of the slidably removable body (270) therethrough, wherein the seal applies a radial force towards the central aperture to maintain a liquid sealing of the guide and also a central placement of the slidably removable body (270) with respect to the guide. The elastic seal allows the same guide to be used for a slidably removable bodies (270) having different transverse cross-sectional sizes and shapes and/or having variable cross-sectional sizes and shapes.

The slidably removable body (270) is configured for slidable removal from the castable flow cell body (120).

The slidably removable body (270) is longitudinal. The slidably removable body (270) may be linear, curved (arc of a circle), or helical (*e.g*. with ≥0.5 to ≤12, more preferably ≥0.5 to ≤5 turns).

The slidably removable body (270) may have a transverse cross-section having a constant shape (*e.g*. circular, oval, rectangular, regular polygonal, irregular polygonal) along a path of (*i.e*. along a flow direction of the flow cell channel formed by) the channel portion (272) of the slidably removable body (270).

The slidably removable body (270) may have a transverse cross-section having a constant size (and optionally shape) along a path of (*i.e*. along a flow direction of the flow cell channel formed by) the channel portion (272) of the slidably removable body (270).

The slidably removable body (270) may have a transverse cross-section having a having a gradually increasing size (and optionally shape) along a path of (*i.e*. along a flow direction of the flow cell channel formed by) the channel portion (272) of the slidably removable body (270).

The slidably removable body (270) may be disposed at one end with a handle (272) configured for gripping for insertion and/or removal of the slidably removable body (270) from the pair of guides (236, 238).

The mould assembly (200) may further comprise at least one auxiliary slidably removable body having an auxiliary channel portion that contacts the slidably removable body (270) for formation of a furcated (bifurcated or a trifurcated) flow cell channel (140).

Wherein the first mould body (220) and/or second mould body (250) comprises one or more auxiliary guides, wherein:
- each auxiliary guide is configured for slidable coupling with at least the auxiliary channel portion of the auxiliary slidably removable body (270),
- each auxiliary guide is configured for (stable, supporting) placement of the auxiliary channel portion within the moulding cavity (222) such that a combination of the channel portion (272) and the auxiliary channel portion form the furcated flow cell channel (140) in the castable flow cell body (120).

Wherein the first mould body (220) is comprised in the base holder (220').

Wherein the base holder (220') comprises the first mould body (220).

Wherein the first mould body (220) comprises the base holder (220').

The mould assembly (200) may be made from any suitable material, for instance, metal, alloy, polymer, or a mixture of these. The first mould body (220) may be made from metal, alloy, polymer, or a mixture of these. It may or may not be additively manufactured (*e.g*., 3D printed). The second mould body (250) may be made from metal, alloy, polymer, or a mixture of these. It may or may not be additively manufactured (*e.g*., 3D printed). The slidably removable body (270) may be made from metal, alloy, polymer, or a mixture of these. It may or may not be additively manufactured (*e.g*., 3D printed).

Further provided is a kit comprising the mould assembly (200) as described herein, and one or more of:
- one or more aliquots of casting substance;
- one or more aliquots of CS carrier liquid;
- one or more aliquots of sample carrier liquid;
- data (e.g. on a data carrier or a data stream) containing geometry information for 3D printing of one or more (preferably all) components of the mould assembly (200);
- one or more mould assemblies (200);
- a liquid pump system.

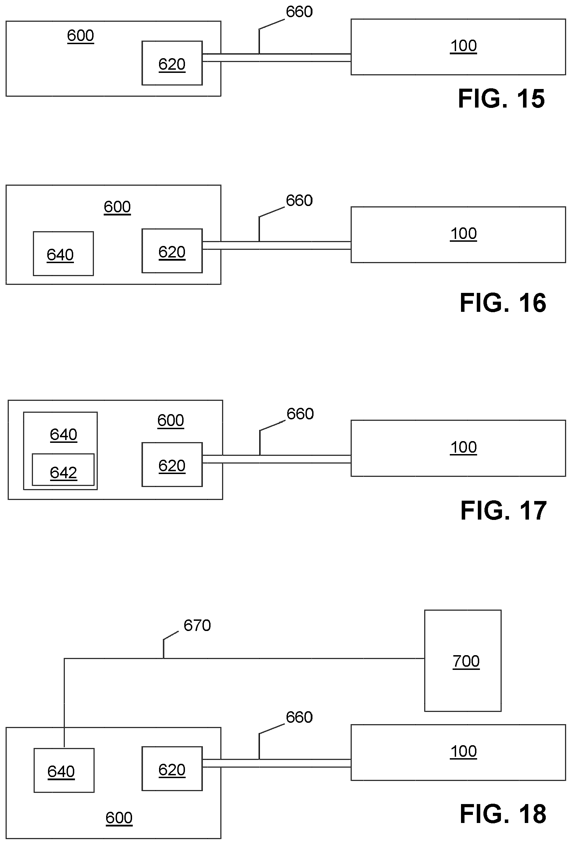

Flow of the liquid sample along the flow cell channel (140) may be induced by a liquid pump system (600) comprising a flow inducer (620). An exemplary liquid pump system (600) is shown in **FIG. 15****.**

The liquid pump system is configured for operative connection to the flow cell unit (100). In particular, it is configured for operative connection to a first port inlet or second inlet port of the flow cell channel (140) of the flow cell unit (100). Connection is realised by a tubing (660).

The liquid pump system (600) typically comprises a flow inducer (620) and a controller (640), wherein the controller is configured to control the flow inducer such that direction and/or speed flow of liquid (sample) induced by the flow inducer is adjustable. An exemplary liquid pump system (600) with a flow inducer (620) and controller (640) is shown in **FIG. 16****.**

The flow inducer may comprises any suitable pump for inducing flow in a flow cell (100). Non-limiting examples of pumps include: a positive pressure pump (pushes liquid into), a negative pressure pump (draws liquid from), a dual positive-negative pressure pump (able to operate in either mode). Particular types of pump include a syringe pump, a reciprocating pump, a peristaltic pump (able to operate in positive or negative pressure mode).

The controller (640) is preferably further configured to control the flow inducer, such that a flow of liquid (sample) induced by the flow inducer is in a forward direction, in a reverse direction, or is stationary.

The controller is preferably configured to control the flow inducer, such that a flow of liquid (sample) induced by the flow inducer is selectable from one of a forward direction, a reverse direction, and stationary.

The controller may comprise a mechanical input unit (642) (*e.g.* rotatable dial, slidable dial, touch screen, push button(s), joystick, toggle switch(es)) for receiving a mechanical input from an operator. The controller may be configured to control the flow inducer, such that a flow of liquid (sample) induced by the flow inducer is in a forward direction, in a reverse direction, or is stationary, responsive to the mechanical input provided to the mechanical input unit. An exemplary liquid pump system (600) with a flow inducer (620), controller (640) and mechanical input unit (642) is shown in **FIG. 17****.**

The controller may be configured to control the flow inducer such that it is synchronised with the imaging by the light microscope (700). The controller synchronised with the imaging is configured to automatically identify a presence and/or absence of a multicellular cellular construct within a field of view of the light microscope, or to receive a signal corresponding to a presence and/or absence of a multicellular cellular construct within a field of view of the light microscope. The identification of the presence and/or absence of a multicellular cellular construct may be achieved by any known technique such as, for instance, using a machine learning model. An exemplary liquid pump system (600) with a flow inducer (620), controller (640) and synchronised to the light microscope (700) is shown in **FIG. 18****.** Synchronisation is realised in part by a data connection (670).

Where the multicellular cellular construct is identified as present within the field of view of the light microscope, the controller may (automatically) pause a flow of liquid (sample) induced by the flow inducer, or the controller may (automatically) reduce a flow rate of liquid (sample) induced by the flow inducer. Where the multicellular cellular construct is identified as absent within the field of view of the light microscope, the controller may (automatically) resume the flow of liquid (sample) induced by the flow inducer, or the controller may (automatically) restore the flow rate of liquid (sample) induced by the flow inducer.

Having forward, reverse and stationary control of the position of the sample within the field of view provides an ability to position and re-position a multicellular construct (*e.g*., organoid).

Having forward, reverse and stationary control allows the multicellular construct to be re-imaged. It allows the multicellular construct to be re-imaged after a challenge (*e.g*., by exposure to an agent (chemical, biological) or physical contacting). It also reimaging same multicellular construct after a challenge (chemical or physical perturbation) *e.g*., in another compartment or furcation. The act of displacing (forward and reverse) the multicellular construct causes concomitant rotation of the multicellular construct, so it can be re-imaged in a different orientation.

An ability to reduce and restore a flow rate allows imaging of a volume without having to fully pause the flow.

Further provided is a system comprising:
- a flow cell unit (100) as described herein; and
- a liquid pump system operatively connected to (a first port inlet or second inlet port of the flow cell channel of) the flow cell unit (100) as described herein.

Further provided is a system comprising:
- a flow cell unit (100) as described herein
- a liquid pump system operatively connected to (a first port inlet or second inlet port of the flow cell channel of) the flow cell unit (100);
wherein the liquid pump system comprises:
a flow inducer and a controller, wherein the controller is configured to control the flow inducer such that direction and/or speed flow of liquid (sample) induced by the flow inducer is adjustable.

Further provided is a method for preparing a castable flow cell body (120) of a flow cell unit (100) as described herein, for imaging by light microscopy a sample under flow comprising at least one multicellular construct suspended in a sample carrier liquid, the method comprising:
- providing a mould assembly (200) configured for moulding the castable flow cell body (120);
- adding the casting substance in a pourable state to the moulding cavity (222);
- allowing or inducing the casting substance to reach the set state; and
- releasing the castable flow cell body (120) so formed from the moulding cavity (222)
wherein the castable flow cell body (120) in the set state has a refractive index matching a refractive index of the sample carrier liquid.

The matching of the castable flow cell body (120) refractive index with the refractive index of the sample carrier liquid may be achieved by providing the casting substance in the pourable state such that the casting substance in a set state has a refractive index matching a refractive index of the sample carrier liquid. The matching may be achieved, for instance, by using a casting substance (CS) carrier liquid in the pourable state having a same composition as the sample carrier liquid.

Alternatively or additionally, matching may be achieved, for instance, by a step of soaking the castable flow cell body (120) so formed in one or more aliquots of the sample carrier liquid. The soaking is for a duration of time such that the sample carrier liquid equilibrates with the castable flow cell body (120).

The releasing comprises uncoupling first mould body (220), the second mould body (250) and the slidably removable body (270) thereby putting the mould assembly into the release state.

The releasing comprises slidably removing the slidably removable body (270) from the pair of guides.

Further provided is a castable flow cell body (120) obtainable by, directly obtained by, or obtained by a method for preparing a castable flow cell body (120) as described herein.

Further provided is a method for preparing a mould assembly (200) for preparing the castable flow cell body (120) of the flow cell unit (100) as described herein, wherein the castable flow cell body (120) of the flow cell unit (100) is for imaging by light microscopy a sample under flow comprising at least one multicellular construct suspended in a sample carrier liquid, the method comprising:
- providing a first mould body (220) as described herein;
- providing a second mould body (250) configured to co-operate with the first mould body (220) as described herein;
- providing a slidably removable body (270) (as described herein) comprising a channel portion (272) complementary to a shape of the flow cell channel (140) and configured for slidable co-operation with the first mould body (220) and/or the second mould body (250);
wherein the first mould body (220), the second mould body (250) and the channel portion (272) are configured to co-operate in the moulding state to form a moulding cavity (222) for receiving the casting substance in a pouring state and for casting the castable flow cell body (120) of the flow cell unit (100).

Further provided is a mould assembly (200) obtainable by, directly obtained by, or obtained by a method for a method for preparing a mould assembly (200) as described herein.

Further provided is a use of a flow cell (100) as described herein for imaging of a sample of at least one multicellular construct under (an induced) flow, wherein:
- the sample comprises one or more samples suspended in a sample carrier liquid;
- the imaging is by light microscopy.

Methods/uses described herein are *in vitro* methods.

### Example

The herein disclosed aspects and embodiments of the invention are further supported by the following non-limiting example.

A mould assembly as described herein was prepared by 3D printing for casting a castable flow cell body as shown in **FIGs. 8** to **12** for a Leica SP8 DLS light sheet microscope optical stage.

A casting substance was prepared containing 1% w/w agarose in a CS carrier liquid of double-deionsed water, in a warm pouring state. The pouring state casting substance was poured into the mould assembly and allowed to set by cooling. The slidable removable body was removed to form a single (non-furcated) flow cell channel, thereby forming the castable flow cell body [C0] according to **FIG. 8****.** The flow cell body in the set state was soaked in a sample carrier liquid (see also below). The sample carrier liquid contained 1.2 g Nycodenz (ProteoGenix SAS 1002424), 25 mg of N-Methyl-D-Glucamine (Millipore-Sigma M2004) per ml of distilled water to match the respective refractive indexes as described elsewhere herein.

A sample was prepared containing a plurality of organoids in a sample carrier liquid as follows. A plurality of organoids were labelled with NucRed Dead 647 (Thermo Fisher Scientific, R37113) (1 drop/ml, overnight) after lipid extraction according to a Fast 3D Clear protocol (see elsewhere herein). After labelling, the organoids were washed 3 × 5min in phosphate-buffered saline (PBS) and then incubated in sample carrier liquid for a minimum of 3h prior to imaging, thereby forming the sample. The sample carrier liquid contained 1.2 g Nycodenz (ProteoGenix SAS 1002424), 25 mg of N-Methyl-D-Glucamine (Millipore-Sigma M2004 per ml of distilled water.

The refractive index of the castable flow cell body was 1.515 after soaking, and the refractive index of the sample carrier liquid was 1.512.

As controls, flow cells made from [C1] polydimethylsiloxane (PDMS), [C2] fluorinated ethylene propylene (FEP), or [C3] glass, each compatible with the Leica SP8 DLS light sheet microscope were obtained. The refractive index of flow cell [C1] was 1.42, the refractive index of flow cell [C2] was 1.34, the refractive index of flow cell [C3] was 1.52. Refractive indexes were obtained from standard literature.

Images were acquired from the Leica SP8 DLS light sheet microscope operating in fluorescence mode for each of the flow cells [C0] to [C3]. A 2.5× illumination objective (fluostar, NA 0.07, cat. nr. 506 523) was used in combination with 5 mm TwinFlect mirrors (cat. nr. 158007011) and 10× detection objective (APO NA 0.30, cat. nr. 506 524). Images were acquired at a voxel size (X, Y, Z) of 0.3594 × 0.3594 × 3.7 µm^3. A white light laser with AOBS (acousto-optical beam splitter) was used to obtain an excitation wavelength of 638 nm in combination with a 638nm notch filter at the emission site to visualize the nuclei counterstained with NucRed Dead 647. Both left and right mirrors were used during imaging and both sides were automatically merged by the LAS X software. The results are shown in **FIGs. 13** (Panels A to C) and **14.**

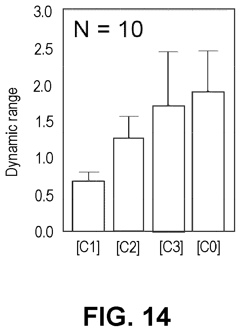

The image obtained from [C0] shows cells had a significantly sharper edge contrast compared with the images obtained in [C1] polydimethylsiloxane (PDMS) [C2] fluorinated ethylene propylene (FEP), and [C3] glass (**FIG. 13** Panels A and B). [C3] (glass) had a similar edge contrast sharpness compared with [C0] (castable flow cell body) because the refractive indexes happened to be similar (1.515 [C0] vs 1.52 [C3]); however [C0] still exhibited a higher sharpness compared with [C3] (**FIG. 13** Panels A and B). Fluorescence intensity profile across the dashed line in Panel B showed peaks having higher intensity against the background and steeper sides for [C0] compared with [C1] or [C2] (**FIG. 13** Panel C). [C3] is more comparable with [CO]; however [C0] still exhibits a higher intensity contrast compared with [C3] (**FIG. 13** Panel C). The dynamic range obtained from [C0] was higher than that obtained from each of [C1], [C2], or [C3] (**FIG. 14**).

## Claims

1. A flow cell unit (100) for imaging of a sample of at least one multicellular construct under flow, wherein:
- the sample comprises one or more multicellular constructs suspended in a sample carrier liquid; and
- the imaging is by light microscopy;
the flow cell unit (100) comprising:
- a castable flow cell body (120) formed from a settable light-transparent casting substance, a casting substance, having a set state in the castable flow cell body (120), wherein the castable flow cell body (120) has a refractive index matching a refractive index of the sample carrier liquid; and
- a flow cell channel (140) in the castable flow cell body (120) for flow of the sample through at least a light-interacting portion (130) of the castable flow cell body (120) such that sample is in contact with the casting substance in the set state in the light-interacting portion (130).

2. The flow cell unit (100) according to claim 1, wherein the light-transparent casting substance in the set state is a gel,
- optionally wherein the gel is a hydrogel, an organogel, or a organo-hydrogel; and
- optionally wherein the gel comprises a setting agent that is agarose, polydimethylsiloxane, polysaccharide, natural synthetic polymer, or a combination of one or more of these.

3. The flow cell unit (100) according to claim 1 or 2, wherein the light interaction portion (130) comprises an upper wall configured for transmission of light to one or more optical detection parts of the microscope.

4. The flow cell unit (100) according to any one of claims 1 to 3, wherein the light interaction portion (130) comprises one or more side walls (134, 134') configured for transmission of illumination or incident light to the sample.

5. The flow cell unit (100) according to any one of claims 1 to 4, further comprise a base holder (220'), configured for supporting at least a lower side (124) of the castable flow cell body (120).

6. A mould assembly (200) configured for preparing the castable flow cell body (120) of the flow cell unit (100) to any one of claims 1 to 5, comprising:
- a first mould body (220);
- a second mould body (250) configured to co-operate with the first mould body (220);
- a slidably removable body (270) comprising a channel portion (272) complementary to a shape of the flow cell channel (140) and configured for slidable co-operation with the first mould body (220) and/or the second mould body (250);
wherein the first mould body (220), the second mould body (250) and the channel portion (272) are configured to co-operate in the moulding state to form a moulding cavity (222) for receiving the casting substance in a pouring state and for casting the castable flow cell body (120) of the flow cell unit (100).

7. A method for preparing a mould assembly (200) for preparing the castable flow cell body (120) of the flow cell unit (100) according to any one of claims 1 to 5, wherein the castable flow cell body (120) of the flow cell unit (100) is for imaging by light microscopy a sample under flow comprising at least one multicellular construct suspended in a sample carrier liquid, the method comprising:
- providing a first mould body (220);
- providing a second mould body (250) configured to co-operate with the first mould body (220);
- providing a slidably removable body (270) comprising a channel portion (272) complementary to a shape of the flow cell channel (140) and configured for slidable co-operation with the first mould body (220) and/or the second mould body (250);
wherein the first mould body (220), the second mould body (250) and the channel portion (272) are configured to co-operate in the moulding state to form a moulding cavity (222) for receiving the casting substance in a pouring state and for casting the castable flow cell body (120) of the flow cell unit (100).

8. A mould assembly (200) obtained by a method according to claim 7.

9. A method for preparing a castable flow cell body (120) of a flow cell unit (100) according to any one of claims 1 to 5, for imaging by light microscopy a sample under flow comprising at least one multicellular construct suspended in a sample carrier liquid, the method comprising:
- providing a mould assembly (200) configured for moulding the castable flow cell body (120);
- adding the casting substance in a pourable state to the moulding cavity (222);
- allowing or inducing the casting substance to reach the set state; and
- releasing the castable flow cell body (120) so formed from the moulding cavity (222)
wherein the castable flow cell body (120) in the set state has a refractive index matching a refractive index of the sample carrier liquid.

10. The method according to claim 9, wherein the mould assembly (200) is the mould assembly according to claim 6.

11. The method according to claim 9 or 10, wherein the matching of the castable flow cell body (120) refractive index with the refractive index of the sample carrier liquid is achieved by:
- using a casting substance carrier liquid in the casting substance in the pourable state having a same composition as the sample carrier liquid; and/or
- a step of soaking the castable flow cell body (120) so formed in one or more aliquots of the sample carrier liquid.

12. A castable flow cell body (120) obtained by a method according to any one of claims 9 to 11.

13. A system comprising:
- a flow cell unit (100) according to any one of claims 1 to 5; and
- a liquid pump system operatively connected to the flow cell unit (100) configured to induce flow of the sample
wherein the liquid pump system comprises:
- a flow inducer and a controller, wherein the controller is configured to control the flow inducer such that direction and/or speed flow of sample induced by the flow inducer is adjustable.

14. The system according to claim 13, wherein controller is configured to control the flow inducer, such that a flow of sample induced by the flow inducer is in a forward direction, in a reverse direction, or is stationary.

15. The system according to any one of claims 13 or 14, wherein the controller:
- is configured to control the flow inducer such that it is synchronized with the imaging by the light microscope, wherein :
- the controller is configured to:
automatically identify a presence and/or absence of a multicellular construct within a field of view of the light microscope,
or receive a signal corresponding to a presence and/or absence of a multicellular cellular construct within a field of view of the light microscope,
- a flow of sample induced by the flow inducer is paused or its flow rate is reduced where the multicellular cellular construct is present within the field of view of the light microscope;
- a flow of sample induced by the flow inducer is resumed or its flow rate is restored where the multicellular cellular construct is identified as absent within the field of view of the light microscope.
